# EUROPÄISCHE PATENTSCHRIFT

(11) **EP 0 502 295 B1**
(45) Veröffentlichungstag und Bekanntmachung des Hinweises auf die Patenterteilung: **18.05.1994**
(21) Anmeldenummer: 92101049.2
(22) Anmeldetag: 23.01.1992
(51) Int. Cl.: B60J 7/20

(54) **Faltverdeck für Fahrzeuge**
Convertible top for vehicle
Toit convertible pour véhicule

(30) Priorität: 02.03.1991 DE 4106732
(43) Veröffentlichungstag der Anmeldung: 09.09.1992
(73) Patentinhaber: Dr.Ing.h.c. F. Porsche Aktiengesellschaft, 70435 Stuttgart (DE)
(72) Erfinder: Burst, Hermann, W-7255 Rutesheim (DE)

(56) Entgegenhaltungen:
- DE-A- 3 915 867
- US-A- 4 746 163

## Beschreibung

Die Erfindung bezieht sich auf ein Faltverdeck für Fahrzeuge, das bei geöffnetem Verdeck in einem zugeordneten Verdeckkasten abgelegt ist, der mit einem schwenkbar gelagerten Verdeckkastendeckel versehen ist.

Ein bekanntes Faltverdeck der eingangs genannten Gattung ist aus der DE-C- 39 15 867 bekannt. Das Faltverdeck liegt bei geöffnetem Verdeck lose zusammengefaltet im Verdeckkasten und beansprucht eine relativ große Bauhöhe, da in Höhenrichtung gesehen der Abstand zwischen dem Faltverdeck und dem darüberliegenden Verdeckkastendeckel etwa 20 mm betragen muß, um ein Scheuern zwischen den Dichtungen des Verdecks und dem Verdeckkastendeckel zu vermeiden. Im Fahrbetrieb treten bei geöffnetem Verdeck Eigenbewegungen des Faltverdecks im Verdeckkasten auf, die zu Klappergeräuschen führen.

Aufgabe der Erfindung ist es, an einem in einem Verdeckkasten untergebrachten Faltverdeck solche Vorkehrungen zu treffen, daß einerseits die Bauhöhe des Verdeckkastens reduziert werden kann und daß andererseits Klappergeräusche des abgelegten Faltverdecks im Fahrbetrieb sowie Scheuerbewegungen zwischen den Dichtungen des Verdecks und dem Verdeckkastendeckel weitgehend vermieden werden.

Erfindungsgemäß wird diese Aufgabe durch die kennzeichnenden Merkmale des Anspruchs 1 gelöst. Weitere, die Erfindung in vorteilhafter Weise ausgestaltende Merkmale sind in den Unteransprüchen enthalten.

Die mit der Erfindung hauptsächlich erzielten Vorteile sind darin zu sehen, daß durch Anordnung von zumindest einer Einrichtung am Verdeckkastendeckel ein zwangsweises Zusammendrücken bzw. Einspannen des Faltverdecks durch den Verdeckkastendeckel im Verdeckkasten erfolgt, wodurch keine Relativbewegungen zwischen dem Faltverdeck und dem Verdeckkastendeckel ermöglicht und somit Klappergeräusche vermieden werden. Ferner kann die Bauhöhe des Verdeckkastens reduziert werden, da die Eigenbewegungen des Faltverdecks reduziert werden und das Faltverdeck außerdem weiter zusammengedrückt wird. Bei der Anordnung von zumindest einer Einrichtung am Verdeckkastendeckel ist es ausreichend, wenn zwischen Faltverdeck und Verdeckkastendeckel ein konstruktiver Spalt von ca. 5 mm vorgesehen wird.

Die Einrichtungen werden durch einfach herzustellende Druckelemente gebildet, die vorzugsweise einstellbar am Verdeckkastendeckel oder an dessen Scharnier befestigt sind. Durch Hebelwirkung der vorgesehenen Einrichtungen werden hohe Druckkräfte auf das Faltverdeck erzeugt und die Einrichtungen wirken als Niederhalter.

Ein Ausführungsbeispiel der Erfindung ist in der Zeichnung dargestellt und wird im folgenden näher beschrieben. Es zeigt
- Fig. 1: eine perspektivische Seitenansicht eines Cabriolets mit einem Faltverdeck und einem Verdeckkasten mit einem Verdeckkastendeckel,
- Fig. 2: einen Mittel-Längsschnitt durch einen Scharnierarm des Verdeckkastendeckels mit einem Teilbereich des abgelegten Faltverdecks,
- Fig. 3: eine Ansicht auf einen vorderen Endbereich des Verdeckkastendeckels mit einem Druckelement.

Ein Cabriolet 1 weist ein Faltverdeck 2 auf, das bei geöffnetem Verdeck in einem einen Rücksitzbereich 3 U-förmig umschließenden Verdeckkasten 4 der Karosserie versenkbar ist. Der Verdeckkasten 3 weist eine nach oben gewandte Öffnung 5 auf, die mittels eines Verdeckkastendeckels 6 abdeckbar ist, welcher hinter dem Verdeckkasten 4 schwenkbar an der Karosserie gelagert ist. Hierzu sind an der Innenseite des Verdeckkastendeckels 6 - in Querrichtung gesehen - zwei mit Abstand zueinander angeordnete, aushebende Scharnierarme 7 vorgesehen, wobei ein Endbereich 8 der Scharnierarme 7 fest mit dem Verdeckkastendeckel 6 verbunden ist. Der andere Endbereich des Scharnierarmes 7 ist an einem angrenzenden Querträger 9 der Karosserie in nicht näher dargestellter Weise drehbar gelagert.

Damit das Faltverdeck 2 platzsparend (=geringe Bauhöhe des Verdeckkastens 4) im Verdeckkasten 4 untergebracht werden kann und Klappergeräusche während des Fahrbetriebs mit offenem Dach vermieden werden, ist vorgesehen, daß am Verdeckkastendeckel 6 zumindest eine Einrichtung 10 vorgesehen ist, die bei geschlossenem Verdeckkkastendeckel 6 mit einem Verdeckgestell 11 des darunterliegenden Faltverdecks 2 abstützend zusammenwirkt, d.h., durch die Einrichtung 10 wird das Faltverdeck 2 zwangsweise weiter nach unten zusammengedrückt und gleichzeitig eingespannt. Dadurch werden Eigenbewegungen des zusammengefalteten Faltverdecks 2 weitgehend vermieden.

Die Einrichtung 10 wird durch zumindest ein dem abgelegten Faltverdeck 2 zugekehrtes Druckelement 12, 13 gebildet, das bei geschlossenem Verdeckkastendeckel 6 mit einem fluchtenden längs- oder querverlaufenden Rahmenteil des Verdeckgestells 11 in Wirkverbindung steht.

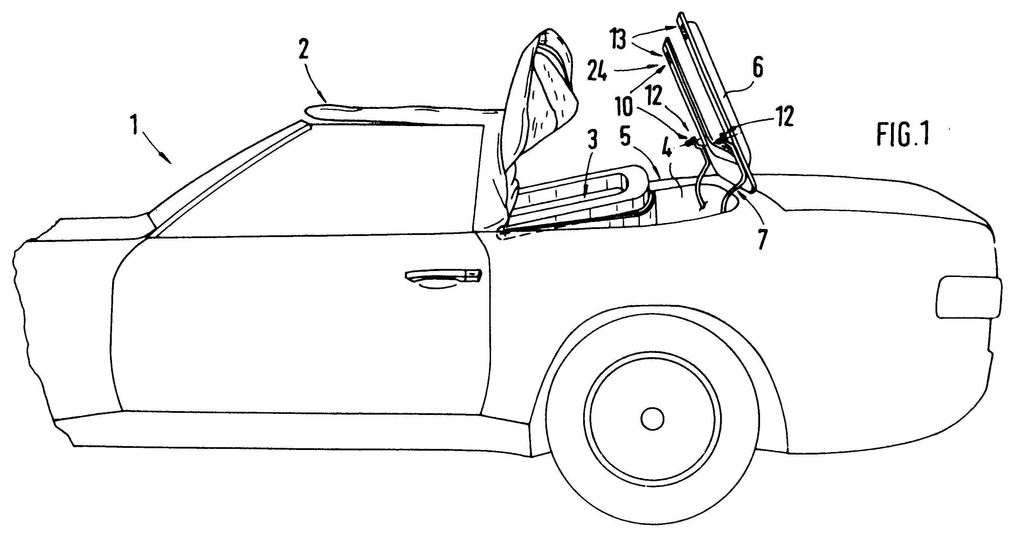

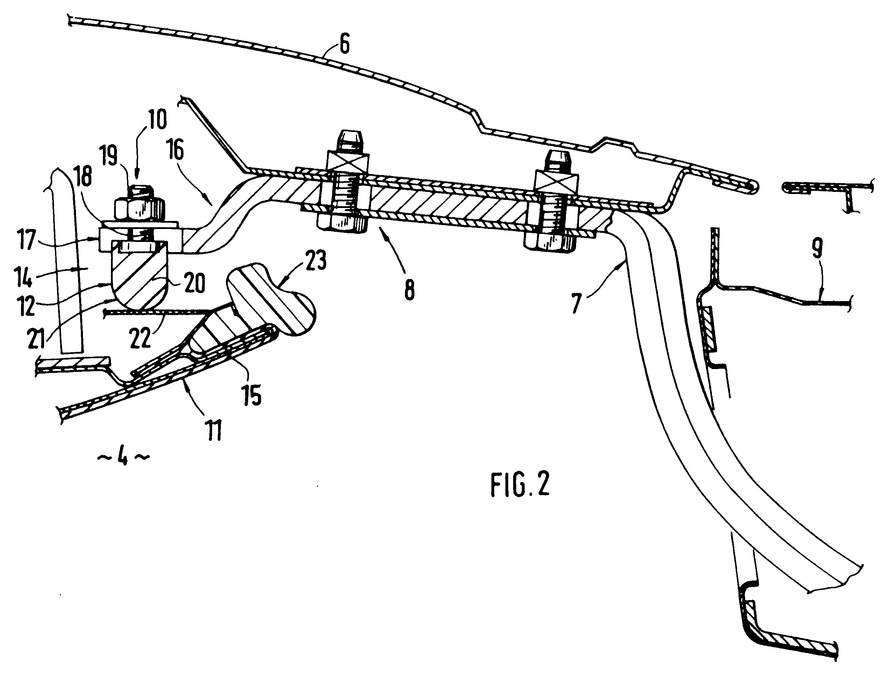

Im Ausführungsbeispiel (Fig. 1) sind am Verdeckkastendeckel 6 vier beabstandete Druckelemente 12, 13 vorgesehen, die bei geschlossenem Verdeckkastendeckel 6 das Faltverdeck 2 niederdrücken und es gleichzeitig einspannen. Gemäß den Fig. 1 und 2 sind an einem hintenliegenden Randbereich 14 des Verdeckkastendeckels 6 zwei in Querrichtung gesehen, mit Abstand zueinander angeordnete Druckelemente 12 angebracht, die bei geschlossenem Verdeckkastendeckel 6 gegen ein darunterliegendes querverlaufedes Rahmenteil 15 des Verdeckgestells 11 drücken.

Entsprechend Fig. 2 sind die hinteren Druckelemente 12 jeweils am Scharnierarm 7 des Verdeckkastendeckels 6 befestigt. Hierzu weist jeder Scharnierarm 7 an seinem dem Verdeckkastendeckel 6 zugekehrten Ende eine nach unten gerichtete stufenförmige Anformung 16 auf, an der ein zugeordnetes Druckelement 12 in Lage gehalten ist. An einem etwa horizontalen Steg 17 der Anformung 16 ist eine abgesetzte Bohrung 18 zur Aufnahme eines zapfenförmigen Befestigungsabschnittes 19 des Druckelementes 12 vorgesehen, wobei ein Außengewinde des Befestigungsabschnittes 19 in ein Innengewinde der Bohrung 18 eingedreht ist. Auf das nach oben hin vorstehende Ende des Befestigungsabschnittes 19 wird eine Scheibe und eine Kontermutter aufgebracht. Unterhalb des Steges 17 umfaßt das Druckelement 12 einen Pufferabschnitt 20, der zylindrisch, quaderförmig oder dergleichen ausgebildet ist. Der aus einem geeigneten Kunststoff oder Hartgummi hergestellte Pufferabschnitt 20 ist beispielsweise durch Vulkanisieren mit dem Befestigungsabschnitt 19 verbunden. Der mit dem Rahmenteil 15 des Verdeckgestells 11 zusammenwirkende Bereich 21 des Pufferabschnitts ist im Ausführngsbeispiel kalottenförmig ausgebildet.

Das Druckelement 12 ist mittels der Kontermutter in Höhenrichtung (= in Richtung abgelegtes Faltverdeck 2) einstellbar ausgebildet, so daß Einbau- und Fertigungstoleranzen ausgeglichen werden können und stets eine einwandfreie Funktion des Druckelementes 12 gewährleistet ist.

Gemäß Fig. 2 stützt sich der kalottenförmige Bereich 21 des Pufferabschnittes 20 an einer Halteleiste 22 für eine Dichtung 23 des vorderen Rahmenteiles 15 ab. Es besteht jedoch auch die Möglichkeit, daß sich das Druckelement 12 direkt am Verdeckgestell 11 abstützt.

Darüber hinaus sind in einem vorderen Abschnitt 24 des Verdeckkastendeckels 6 zwei weitere Druckelemente 13 angebracht, die bei geschlossenem Verdeckkastendeckel 6 mit nicht näher dargestellten, längsverlaufenden Rahmenteilen des Verdeckgestelles 11 zusammenwirken.

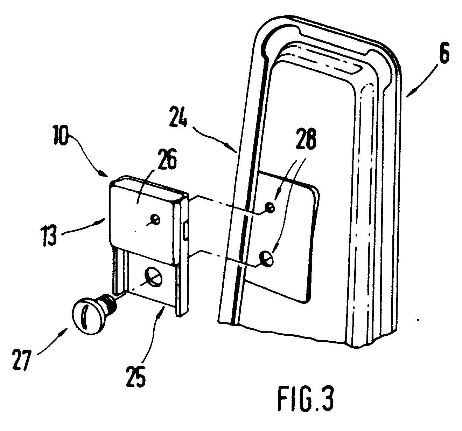

Gemäß Fig. 3 weisen diese ebenfalls als Niederhalter wirkenden Druckelemente 13 eine unterschiedliche Form im Vergleich zu den hinteren Druckelementen 12 auf. Die vorderen Druckelemente 13 bestehen aus einer an der Innenseite des Verdeckkastendeckels 6 befestigbaren Halteplatte 25, die örtlich einen Stützkörper 26 aus Kunststoff oder Hartgummi trägt. Der Stützkörper 26 ist fest mit der etwa U-förmig profilierten Halteplatte 25 verbunden.

Zur Befestigung des vorderen Druckelementes 13 sind jeweils zwei Befestigungsschrauben 27 vorgesehen, die in Gewindeaufnahmen 28 des Verdeckkastendeckels 6 einschraubbar sind. Die vorderen Druckelemente 13 sind in der Draufsicht gesehen, etwa quadratisch oder rechteckförmig ausgebildet, wobei die Bauhöhe so bemessen ist, daß die Druckelemente 13 unter Vorspannung an den darunterliegenden Rahmen- oder Dichtabschnitten des Verdeckgestelles 11 anliegen.

Es besteht ferner die Möglichkeit, daß die Einrichtung 10 bzw. die Druckelemente 12, 13 am Faltverdeck 2 angebracht sind, wodurch eine Umkehr des Funktionsprinzips gegeben ist.

## Patentansprüche

1. Faltverdeck für Fahrzeuge, das bei geöffnetem Verdeck in einem zugeordneten Verdeckkasten (4) abgelegt ist, der mit einem schwenkbar gelagerten Verdeckkastendeckel (6) versehen ist, dadurch gekennzeichnet, daß am Verdeckkastendeckel (6) zumindest eine Einrichtung (10) vorgesehen ist, die bei geschlossenem Verdeckkastendeckel (6) abstützend mit einem darunterliegenden Verdeckgestell (11) des abgelegten Faltverdecks (2) zusammenwirkt.

2. Faltverdeck nach Anspruch 1, dadurch gekennzeichnet, daß jede Einrichtung (10) durch ein Druckelement (12, 13) gebildet wird, das bei geschlossenem Verdeckkastendeckel (6) mit einem fluchtenden längs - oder querverlaufenden Rahmenteil des Verdeckgestelles (11) in Wirkverbindung steht.

3. Faltverdeck nach den Ansprüchen 1 und 2, dadurch gekennzeichnet, daß an einem hintenliegenden Randbereich (14) des Verdeckkastendeckels (6) zwei in Querrichtung gesehen mit Abstand zueinander angeordnete Druckelemente (12) vorgesehen sind, die bei geschlossenem Verdeckkastendeckel (6) gegen ein darunterliegendes, querverlaufendes Rahmenteil (15) des Verdeckgestelles (11) drücken.

4. Faltverdeck nach den Ansprüchen 1 bis 3, dadurch gekennzeichnet, daß die Druckelemente (12, 13) in Richtung abgelegtes Faltverdeck (2) einstellbar ausgebildet sind.

5. Faltverdeck nach den Ansprüchen 1 bis 4, dadurch gekennzeichnet, daß die Druckelemente (12, 13) an einem Scharnierarm (7) des Verdeckkastendeckels (6) befestigt sind.

6. Faltverdeck nach den Ansprüchen 1 bis 5, dadurch gekennzeichnet, daß sich jedes Druckelement (12) aus einem zapfenförmigen Befestigungsabschnitt (19) und einem sich daran anschließenden Pufferabschnitt (20) zusammensetzt, wobei der Pufferabschnitt (20) auf dem dem Faltverdeck (2) zugekehrten Endbereich (21) kalottenförmig ausgebildet ist.

7. Faltverdeck nach Anspruch 6, dadurch gekennzeichnet, daß der Pufferabschnitt (20) aus einem geeigneten Kunststoff oder aus Hartgummi gefertigt ist.

8. Faltverdeck nach einem oder mehreren der Ansprüche 1 bis 7, dadurch gekennzeichnet, daß jeder Scharnierarm (7) des Verdeckkastendeckels (6) an seinem, dem Verdeckkastendeckel (6) zugekehrten Ende eine nach unten gerichtete, stufenförmige Anformung (16) aufweist, an der das Druckelement (12) einstellbar befestigt ist.

9. Faltverdeck nach einem der Ansprüche 1 bis 8, dadurch gekennzeichnet, daß an einem vorderen Abschnitt (24) des Verdeckkastendeckels (6) zusätzliche Druckelemente (13) angebracht sind, die bei geschlossenem Verdeckkastendeckel (6) gegen längsverlaufende Rahmenteile des Verdeckgestells (11) drücken.

10. Faltverdeck nach Anspruch 9, dadurch gekennzeichnet, daß die vorderen Druckelemente (13) direkt an der Innenseite des Verdeckkastendeckels (6) angeschraubt sind und daß jedes vordere Druckelement (13) aus einer etwa U-förmig profilierten Halteplatte (25) und einem eingesetzten, nach unten ragenden Stützkörper (26) aus Kunststoff oder Hartgummi besteht.

## Claims

1. A convertible top for vehicles, which when opened is set down in an associated case (4) provided with a pivotably mounted cover (6), **characterized in that** at least one device, cooperating in a supporting manner with an underlying frame (11) of the lowered convertible top (2) when the top-case cover (6) is closed, is provided on the top-case cover (6).

2. A convertible top according to Claim 1, **characterized in that** each device (10) is formed by a pressure member (12, 13) which when the top-case cover (6) is closed is operatively connected to an aligned part of the frame (11) of the top extending longitudinally or transversely.

3. A convertible top according to Claims 1 and 2, **characterized in that** two pressure members (12), arranged at a distance from each other as viewed in the transverse direction and pressing against an underlying transversely extending part (15) of the frame (11) of the top when the top-case cover (6) is closed, are provided on an edge area (14) of the top-case cover (6) towards the rear.

4. A convertible top according to Claims 1 to 3, **characterized in that** the pressure members (12, 13) are made adjustable in the direction of the lowered convertible top (2).

5. A convertible top according to Claims 1 to 4, **characterized in that** the pressure members (12, 13) are secured to a hinge arm (7) of the top-case cover (6).

6. A convertible top according to Claims 1 to 5, **characterized in that** each pressure member (12) is formed by a pin-shaped fastening portion (19) and a buffer portion (20) adjacent thereto, the buffer portion (20) being made hemispherical on the end area (21) facing the convertible top (2).

7. A convertible top according to Claim 6, **characterized in that** the buffer portion (20) is produced from a suitable plastics material or from hard rubber.

8. A convertible top according to one or more of Claims 1 to 7, **characterized** **in that** each hinge arm (7) of the top-case cover (6) is provided at the end thereof facing the top-case cover (6) with a stepped integral attachment (16) which is orientated downwards and on which the pressure member (12) is secured in an adjustable manner.

9. A convertible top according to one or more of Claims 1 to 8, **characterized** **in that** additional pressure members (13), pressing against longitudinally extending parts of the frame (11) of the top when the top-case cover (6) is closed, are attached to a front portion (24) of the top-case cover (6).

10. A convertible top according to Claim 9, **characterized in that** the front pressure members (13) are bolted directly onto the inside of the top-case cover (6), and each front pressure member (13) comprises a retaining plate (25) with a substantially U-shaped profile and an inserted, downwardly projecting support member (26) of plastics material or hard rubber.

## Revendications

1. Capote pliante pour véhicules, qui, lorsque la capote est ouverte, est rangée dans un coffret de capote (4) correspondant, pourvu d'un couvercle (6) monté pivotant, caractérisée en ce que sur le couvercle (6) du coffret de capote il est prévu au moins un dispositif (10) qui, lorsque le couvercle (6) est fermé, coopère en appui avec un bâti (11) situé au-dessous de la capote pliante (2) rangée.

2. Capote pliante selon la revendication 1, caractérisée en ce que chaque dispositif (10) est formé par un élément de pression (12, 13) qui, lorsque le couvercle (6) est fermé, est en liaison active avec une partie de cadre s'étendant longitudinalement ou transversalement, alignée, du bâti (11) de la capote.

3. Capote pliante selon les revendications 1 et 2, caractérisée en ce que sur une zone de bordure (14) située à l'arrière du couvercle (6) il est prévu deux éléments de pression (12) espacés l'un de l'autre, vus dans la direction transversale, qui, lorsque le couvercle (6) est fermé, pressent contre une partie de cadre (15) transversale, située au-dessous, du bâti (11) de la capote.

4. Capote pliante selon les revendications 1 à 3, caractérisée en ce que les éléments de pression (12, 13) sont réglables dans la direction de la capote pliante (2) rangée.

5. Capote pliante selon les revendications 1 à 4, caractérisée en ce que les éléments de pression (12, 13) sont fixés sur un bras de charnière (7) du couvercle (6).

6. Capote pliante selon les revendications 1 à 5, caractérisée en ce que chaque élément de pression (12) se compose d'une partie de fixation (19) en forme de tenon et d'une partie de butoir (20) s'y raccordant, la partie de butoir (20) ayant une forme de calotte sur la zone d'extrémité (21) tournée vers la capote pliante (2).

7. Capote pliante selon la revendication 6, caractérisée en ce que la partie de butoir (20) est réalisée dans une matière plastique appropriée ou en caoutchouc dur.

8. Capote pliante selon une ou plusieurs des revendications 1 à 7, caractérisée en ce que chaque bras de charnière (7) du couvercle (6) présente, à son extrémité tournée vers le couvercle (G), une formation (16) en gradin, dirigée vers le bas, sur laquelle l'élément de pression (12) est fixé réglable.

9. Capote pliante selon l'une des revendications 1 à 8, caractérisée en ce que sur une partie (24) avant du couvercle (6) sont montés des éléments de pression (13) supplémentaires qui, lorsque le couvercle (6) est fermé, pressent contre des parties de cadre longitudinales du bâti (11) de la capote.

10. Capote pliante selon la revendication 9, caractérisée en ce que les éléments de pression (13) avant sont directement vissés sur le côté intérieur du couvercle (6) et en ce que chaque élément de pression (13) avant est constitué d'une plaque de maintien (25) profilée à peu près en U et d'un corps d'appui (26) inséré, dirigé vers le bas, en matière plastique ou en caoutchouc dur.
